# EUROPEAN PATENT SPECIFICATION

(11) **EP 3 801 785 B1**
(45) Date of publication and mention of the grant of the patent: **08.01.2025**
(21) Application number: 19820346.5
(22) Date of filing: 03.06.2019
(51) Int. Cl.: A63B 22/18, A63B 21/02, A63B 21/045, A63B 23/035, A63B 23/04, A63B 23/08

(54) **EXERCISE DEVICE**
ÜBUNGSVORRICHTUNG
DISPOSITIF D'EXERCICE

(30) Priority: 10.06.2018 US 201862682959 P; 16.12.2018 US 201816221535; 16.12.2018 WO PCT/US2018/065896; 02.06.2019 US 201916429020
(43) Date of publication of application: 14.04.2021
(73) Proprietor: Gouzenko, Alexander, Fort Lee, NJ 07024 (US)
(72) Inventor: Gouzenko, Alexander, Fort Lee, NJ 07024 (US)
(74) Representative: K2 IP Limited
(86) International application number: PCT/US2019/035266
(87) International publication number: WO 2019/240974

(56) References cited:
- WO-A1-2016/024851
- US-A- 4 953 858
- US-A- 5 284 460
- US-A- 5 399 140
- US-A1- 2003 166 434
- US-A1- 2007 027 009
- US-A1- 2008 280 741
- US-A1- 2013 035 617
- US-A1- 2013 316 827
- US-B1- 6 514 180
- US-B2- 9 205 298

## Description

### FIELD OF THE INVENTION

This invention relates to a multipurpose exercise device according to claim 1, used to simulate the movements and motions of athletes in sports, for example, skiers, snowboarders, skateboarders, surfers, kite boarders, water skiers, wake-boarders. The exercise device may be used in training by motion sports athletes and by other recreational athletes. It can also be used in medicine and physical therapy and may be coupled or integrated into a CPU (Computer Processing Unit), computer, game console, Virtual Reality glasses, tablets, and/or video monitor to allow for an interactive experience.

### BACKGROUND OF THE INVENTION

The document US5399140A discloses an exercise device according to the preamble of claim 1. The following references may be relevant to this invention:
US 1565484 to McWhirter
US 2714007 to Jordan
US 1791645 to Stelma
US 4376532 to Hunstad
US 4739986 to Kucharik
US 4966364 to Eggenberger
US 5002272 to Hofmeister
US 5062629 to Vaughan
US 5147257 to Loane
US 5509871 to Giovanni
US 6413197 to McKechnie
US 7344483 to Tacconi
US 7614987 to Guadagno
US 7959544 to Palmer
US 2009/0176631 to Blessing
US 2014/0155236 to Curry.
JP 2015-167849 to Shigeo

The following non-patent references may or may not be effective prior art.
https://skiersedge.com/products/
   Technical ski conditioner (NPL1)
https://voutu.be/3u8d7UUWvtc
   Skiers Edge Technical ski conditioner You Tube video (NPL2)
https://stepsscarve.com/
   Step Carve website (NPL3)

### SUMMARY OF THE DISCLOSURE

The exercise device of this invention is a multipurpose exercise device used to replicate the movements and motions of athletes in several sports. The exercise device may be used in training, physical therapy and medicine. A broad segment of the population can use the device for many purposes. For example, the device users can utilize it to improve their general level of fitness, physical health and balance, and to exercise major groups of muscles, e.g., abs, lateral abdominal muscles, "quads" (quadriceps), "glutes" (gluteal muscles) and calves.

The exercise device of this invention is particularly useful for "motion sport" athletes, such as skiers, snowboarders, skateboarders, surfers, kite boarders, water skiers, wake boarders, etc. The exercise device can help them to improve balance, retain or enhance strength and improve muscles that are utilized in the sports.

The exercise device of this invention is also useful, under a medical practitioner's guidance, for improving balance, muscle and joint strength, treating joint and muscle impairments, increasing joint and muscle mobility and function, and treating certain medical and neurological disorders, such as vertigo, dizziness, Parkinson's disease, multiple sclerosis, stroke recovery, etc.

Additionally, the exercise device of this invention may be coupled with or integrated with a video or internet game for dual purpose of playing the game and at the same time engaging in exercises to improve the individual's level of fitness.

Broadly, the exercise device of this invention includes a stable base that rests on a substantially horizontal support surface, e.g., floor, lawn, etc. A support post is mounted to the top of the base and a user platform is mounted to the top of the support post. The exercise device of this invention uses a synergistic balance of resistance elements (e.g., dampers, pistons, elastic bands, springs, or other types of resistance as further described herein) and pivot points to create a smooth, realistic simulation of the real world movements in specific sports activities. The user's body is positioned on the user platform and the location and action of the user's feet and body determine the motions of the user platform to provide the desired exercise movements.

More specifically, the exercise device of this invention comprises a base having an upper surface and lower surface, the lower surface resting on a substantially horizontal support surface. A user platform is provided having a lower surface and an upper surface upon which the user stands. A support post, which may be T-shaped, is also provided and consists of an upper cross bar section with vertical pivots and a vertical column section below the cross bar section. The support post is mounted to the base and the vertical column section or cross bar section axially pivots on the base. The lower surface, sides or other parts of the user platform are mounted to vertical pivots in the cross bar section of the support post. The user platform thus pivots with the support post in a horizontal plane parallel to the horizontal support surface. Additionally, the user platform pivots on the support post in a vertical plane perpendicular to the horizontal support surface. A plurality of resistance elements having a first end and a second end are provided. The first end is mounted to the support post or user platform and the second end is mounted to the base to control the resistance, velocity and angle of pivot of the user platform in the horizontal plane. Optionally, at least one of the resistance elements is adjustable to further control the resistance, velocity and angle of pivot of the user platform in the horizontal plane. Optionally, at least one dampening element is provided having a first end and a second end, the first end is mounted to the support post or user platform and the second end is mounted to the base to control the resistance, velocity and angle of pivot of the user platform in the horizontal plane. Optionally, a plurality of resistance elements having a first end and a second end are provided with the first end mounted to the base or support post and the second end mounted to the user platform to control the resistance, velocity and angle of pivot of the user platform in the vertical plane. Optionally, at least one of the resistance elements is adjustable to further control the resistance, velocity and angle of pivot of the user platform in the vertical plane. In use, the user stands on the upper surface of the user platform and performs exercise motions to propel the user platform to pivot in the horizontal plane and the vertical plane.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

Further aspects, features and advantages of the present invention will become even more apparent with reference to the following detailed description and the accompanying drawings.

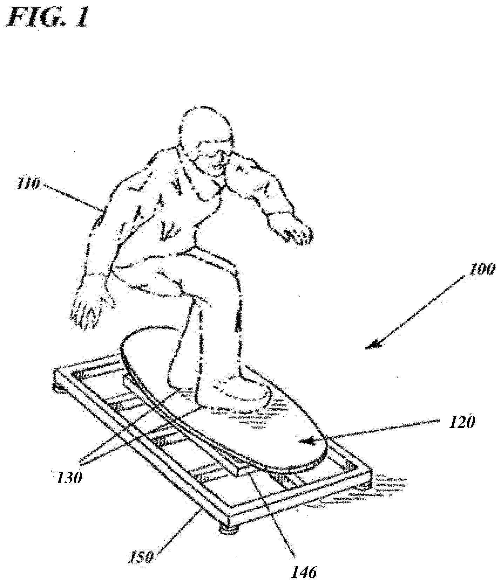

**Fig. 1** is a perspective schematic representation of the exercise device **100** of the present invention showing a user **110** positioned on a user board **120,** that is mounted on top of a user platform **146** which in turn is mounted to a base **150** that rests on a substantially horizontal support surface.

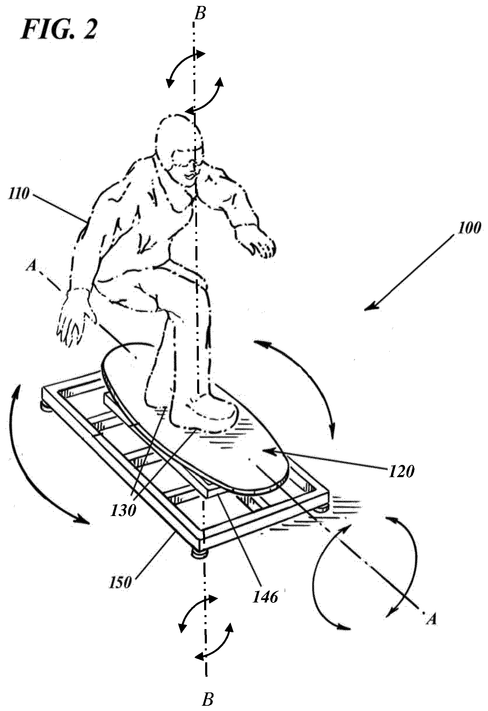

**Fig. 2** is a view similar to **Fig. 1** wherein the range of movements and articulation of the exercise device **100** have been added, i.e. vertical pivot around the horizontal axis **A-A** and horizontal pivot around the vertical axis **B-B.**

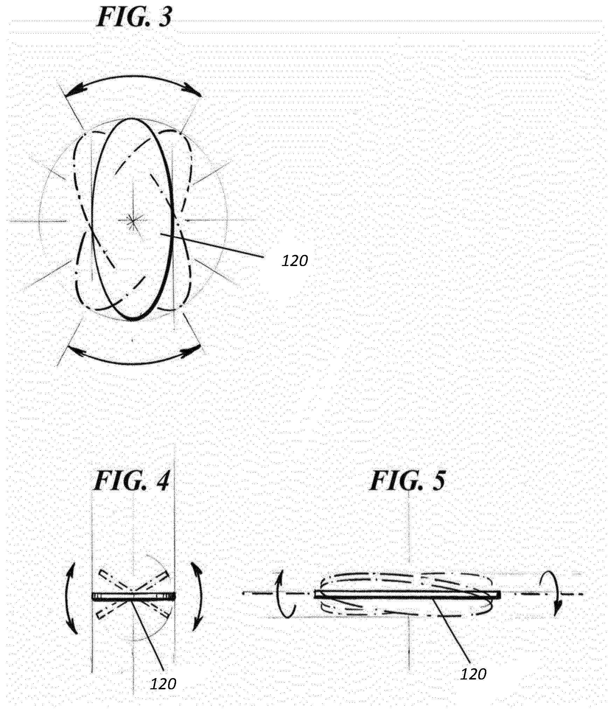

**Fig. 3** is a top plan view of the user board **120** shown in **Fig. 2** showing the range of pivot movements of the user board **120** in the horizontal plane around the vertical axis **B-B** shown in **Fig. 2****.** The user platform **146** (not shown) under the user board **120** conforms to or follows the movements of the user board **120.**
**Fig. 4** is an end view of the user board **120** shown in **Fig. 2** showing the range of pivot movements of the user board **120** in the vertical plane around the horizontal axis **A-A** shown in **Fig. 2****.** The user platform **146** (not shown) under the user board **120** conforms to or follows the movements of the user board **120.**
**Fig. 5** is a side view of the user board **120** shown in **Fig. 2** showing the range of movements of the user board **120** in the vertical plane around the horizontal axis **A-A** shown in **Fig. 2****.** The user platform **146** (not shown) under the user board **120** conforms to or follows the movements of the user board **120.**

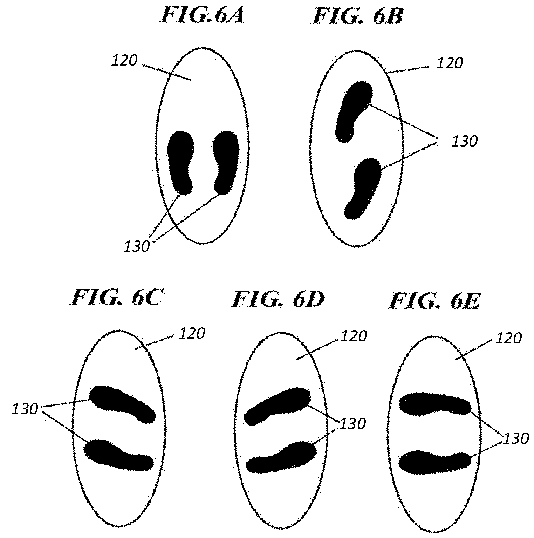

**Figs. 6A** through **6E** are schematic top views of the user board **120** depicting a variety of possible foot placement positions **130** on the user board **120** that drive the vertical and horizontal pivot motions of the user board **120** and user platform **146.** Foot mounts (not shown) can be mounted directly on the user board **120** or on the user platform **146** if the user board **120** is not used.

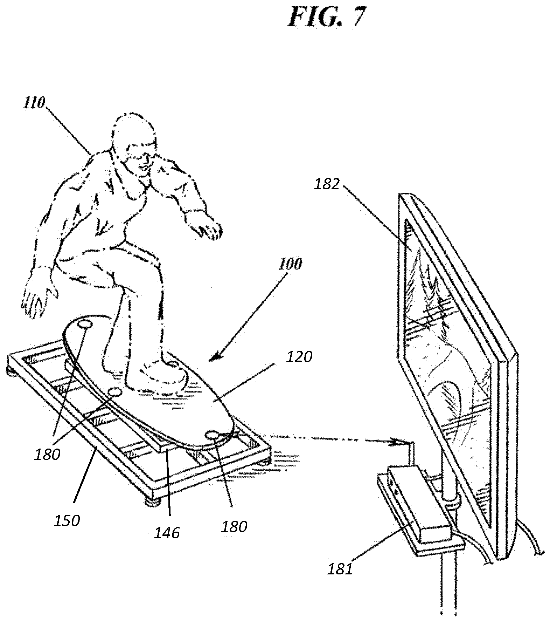

**Fig. 7** is a perspective view showing an embodiment of the exercise device **100** of this invention wherein the exercise device **100** communicates through sensors **180** integrated into the device **100** (e.g., the user board, user platform or both) to transmit (wired or wireless) the motion, velocity, acceleration of motion and/or position of the user board **120** and/or the user platform **146** to a CPU (Computer Processing Unit), game console, tablet, Virtual Reality glasses, computer **181** and/or video monitor **182** to allow for an interactive experience that may include data compilation on the exercise motions.

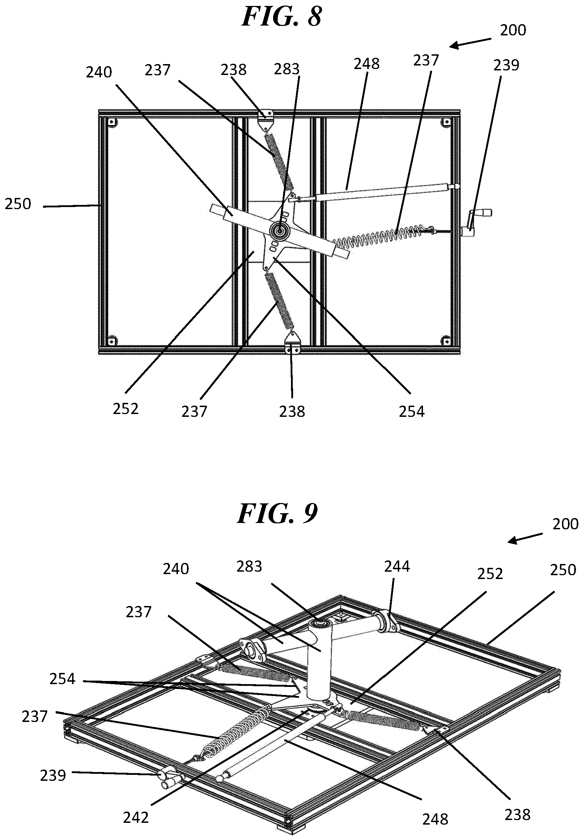

**Figs 8** through **16** illustrate an embodiment of the exercise device **200** of this invention that incorporates the use of the dampening piston strut **248** and a plurality of vertical resistance springs **221** and horizontal resistance springs **237** (or other types of resistance elements as further described herein) to enable control of resistance around the horizontal and vertical pivots of the user platform **246** about the support post **240** that supports and mounts the user platform **246** to the base **250.** This embodiment does not include any guiding mechanism to control the angle of vertical pivot or tilt of the user-platform **246** around the horizontal axis **A-A.**

The drawings are not presented to scale but are only used to illustrate the principles of the invention. In the drawings, like reference numbers indicate like elements.

### DETAILED DESCRIPTION OF THE INVENTION

### Figures 1-7 Schematic

The broad concept and principles of the exercise device of the present invention can be seen schematically in **Figs. 1** through **7****.** The exercise device **100** is a multipurpose exercise device for replicating exercise motions for a user for a plurality of sports and physical therapy. Referring to **Figs. 1** and **2****,** the exercise device **100** includes a base **150** that rests on a surface, e.g., floor, lawn, etc. The exercise device has a user platform **146** that is mounted to the top of the base **150.** The user platform **146** has a lower surface and an upper surface. The lower surface of the user platform **146** is mounted to the upper surface of the base by a support post (not shown). The support post permits the user platform to pivot around the support post in a horizontal plane (i.e. parallel to the horizontal support surface the base **150** rests upon) and vertical plane (i.e. perpendicular to the horizontal support surface). A user board **120** (as shown in **Figs 1-7**), ski module or snowboard module (as further described herein) can be mounted on top of the user platform **146.** The user platform **146,** user board **120,** snowboard module and ski module can be designed in various shapes and forms (e.g. in the shape of a snowboard, wakeboard, etc.) to simulate a variety of sports, e.g., snow-sports, water-sports, land-based sports. In use, the user stands on top of the user platform, for example on foot mounts **130** that may be mounted directly on the user board **120** or on the user platform **146.** The foot mounts **130** can also take different shapes or forms and can be simple footplates or placeholders made from materials that prevent slippage, or they can be mounts for ski-boots, snow-board boots and water ski foot inserts.

It should be understood that the use of the term *user board* and *user platform* in describing **Figs 1-7** are used to emphasize the fact that this invention contemplates the use of one or a of plurality of platforms that can be mounted on top of the support post and/or on top of each other. These platforms may contain electronic and digital components therein (or thereon) for use with the exercise device, there may be an additional user platform that is designed for cushioning or structural support or that provides another degree of horizontal (or even vertical) pivoting to the exercise device. This invention does not exclude these possibilities for multiple platforms. However, for the sake of brevity this application uses the term *user platform* most of the time to discuss the relationship of the platform(s) with the remaining elements of the exercise device **100.**

The user's **110** body positions on the user board **120** and the location and action of the user's feet on foot mounts **130** and body motion determine the motions and coaction, and propel the user platform **146,** user board **120** and the support post (not shown) to provide the desired exercise motions. The user platform **146,** user board **120** and the support post (not shown) co-act with each other to provide the vertical pivoting around the horizontal axis **A-A** and pivoting in horizontal plane around the vertical axis **B-B** to provide the appropriate motions (as shown on **Fig.2**).

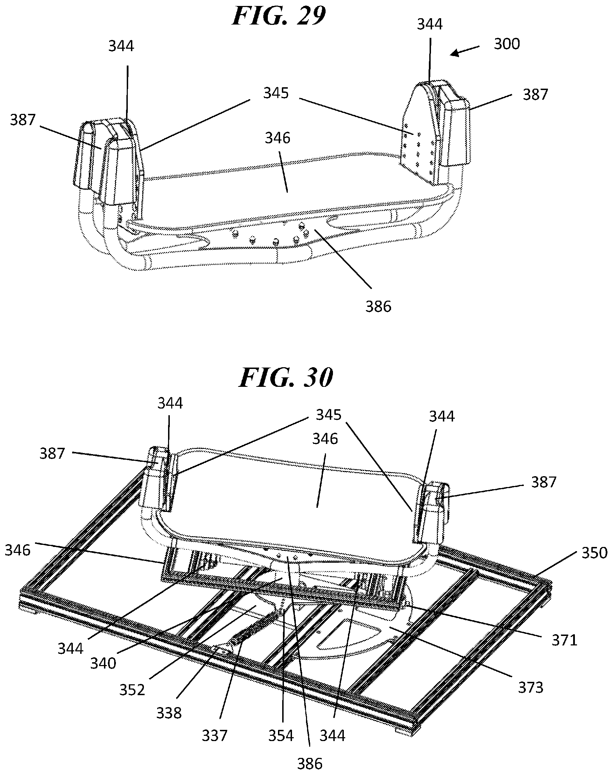

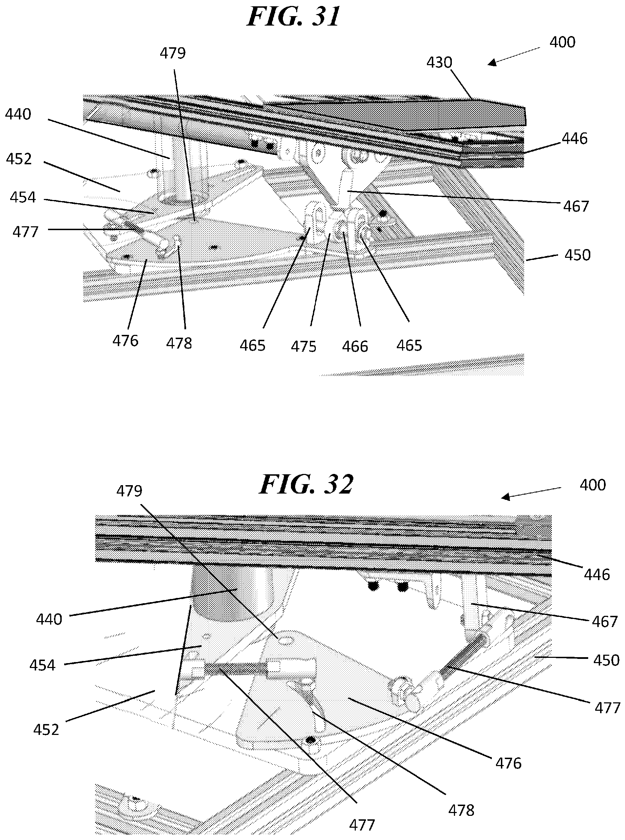

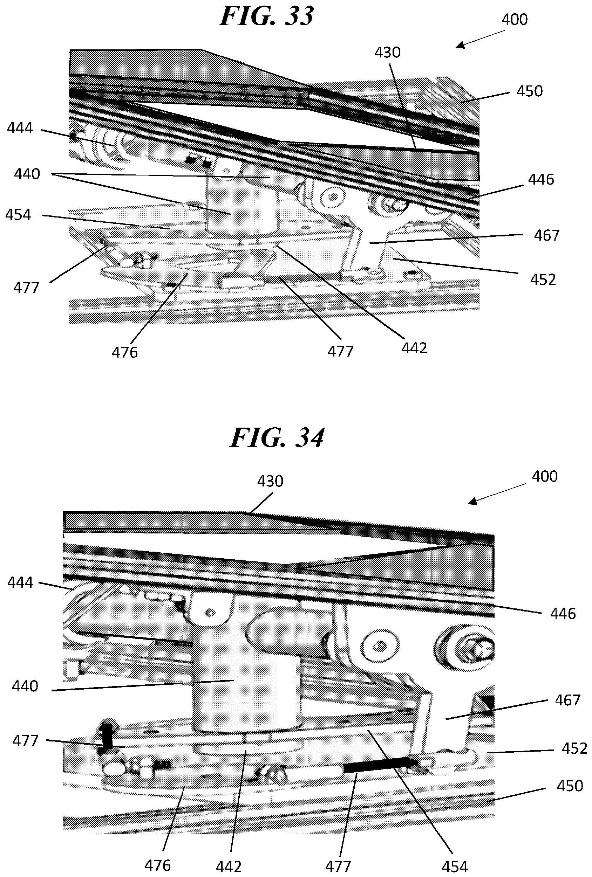

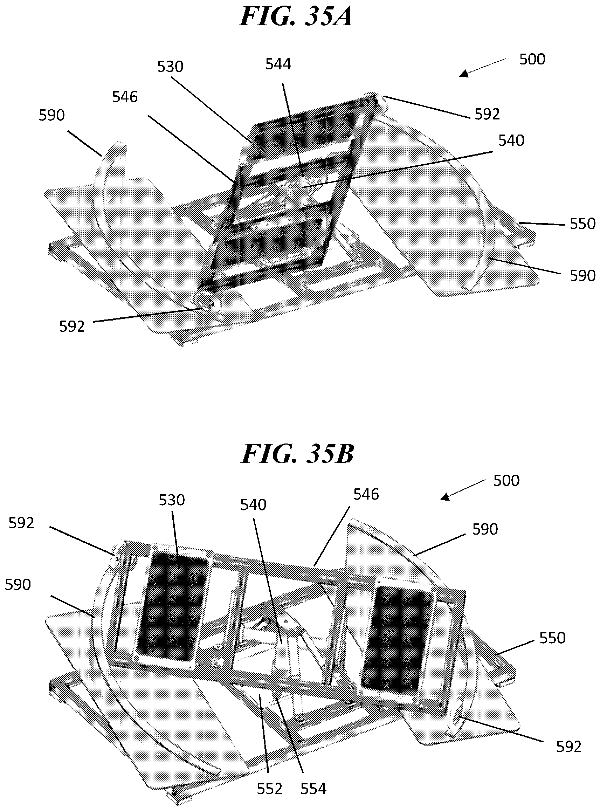

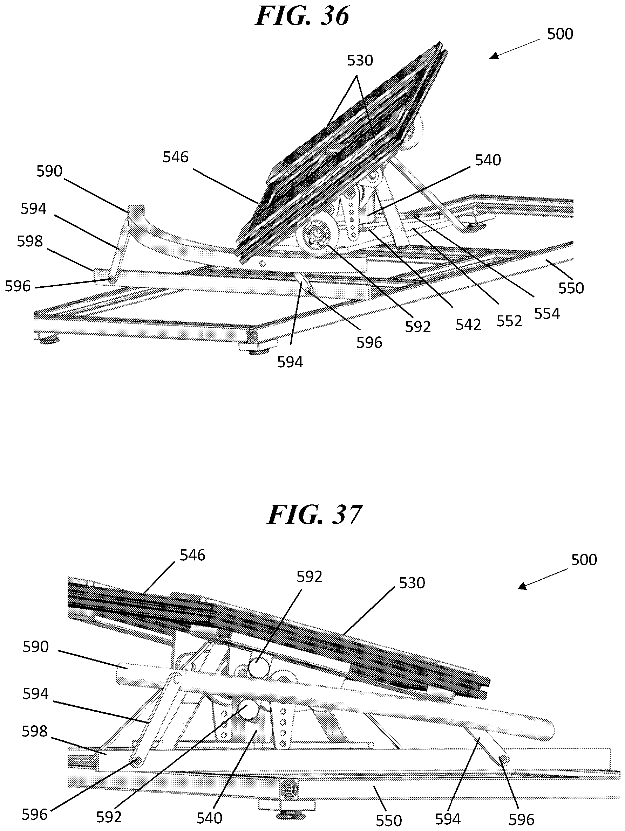

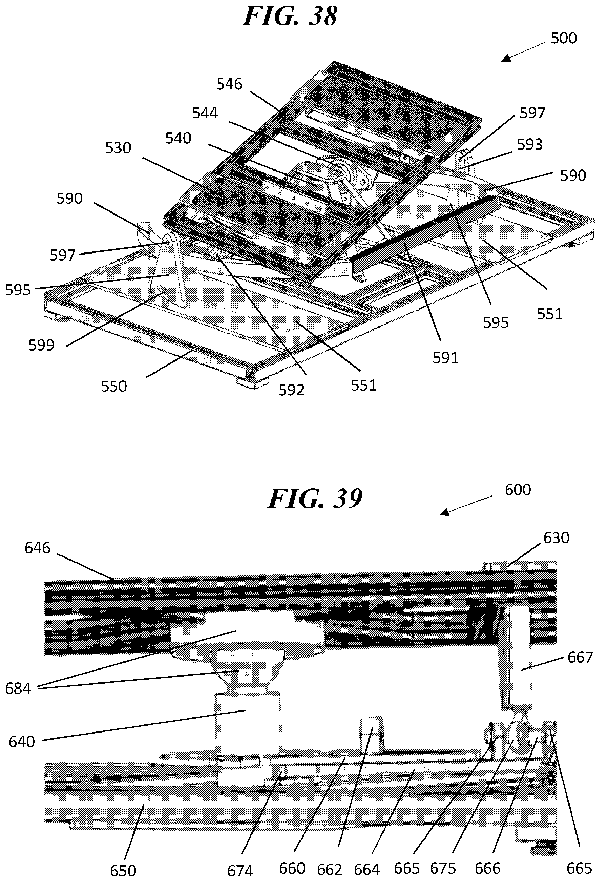

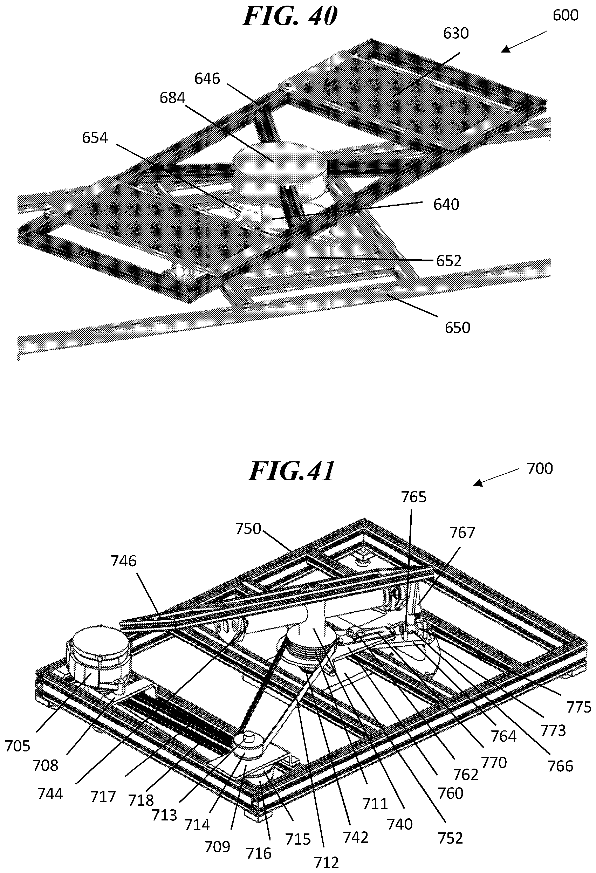

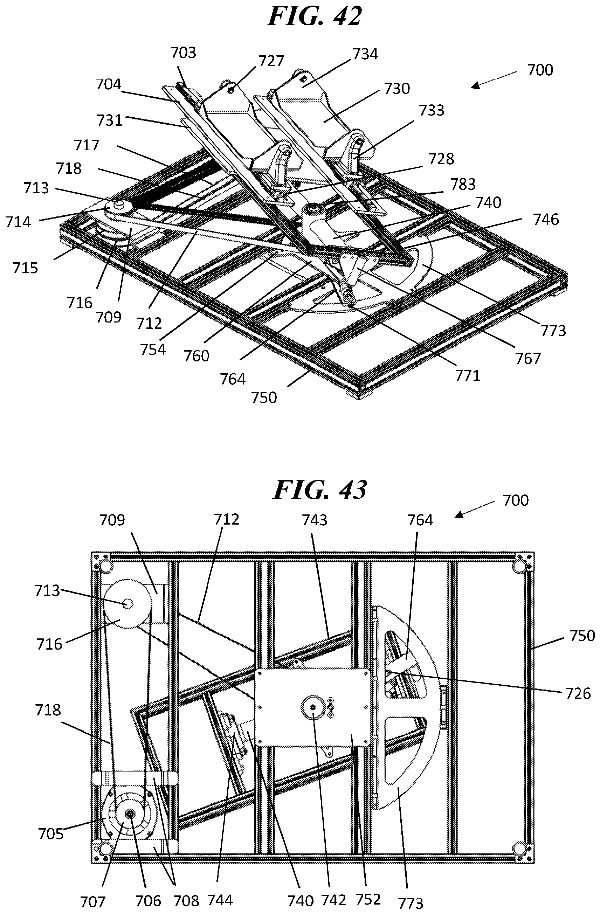

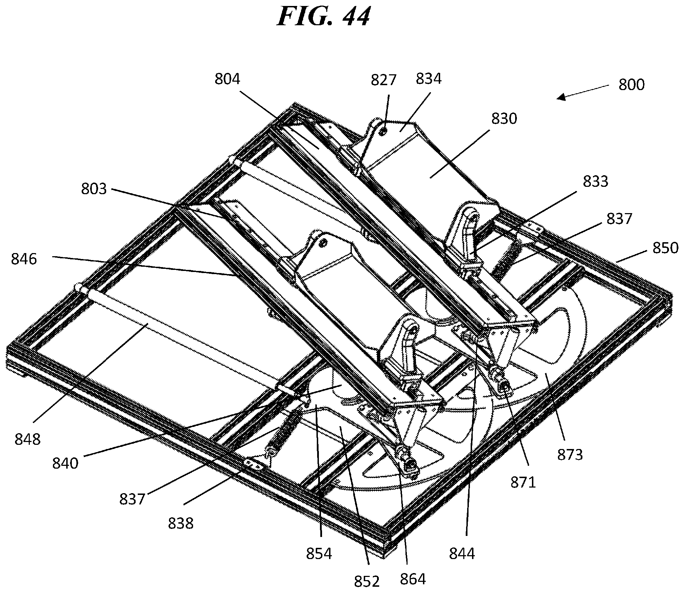

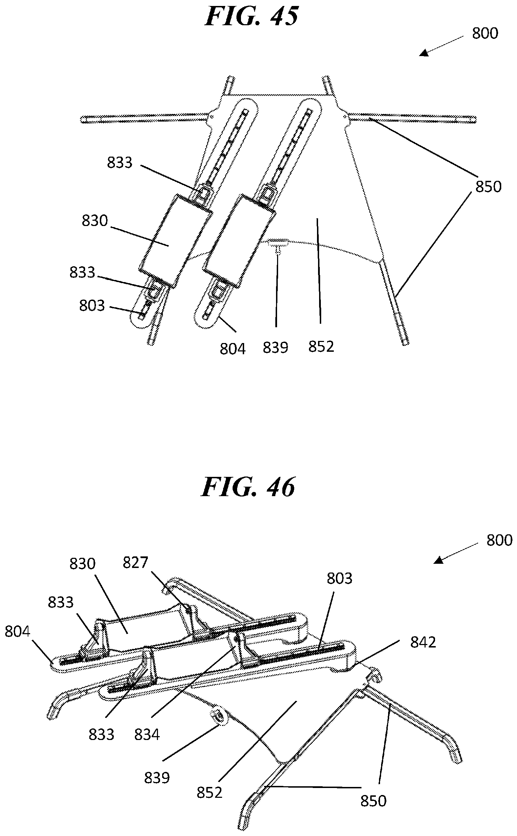

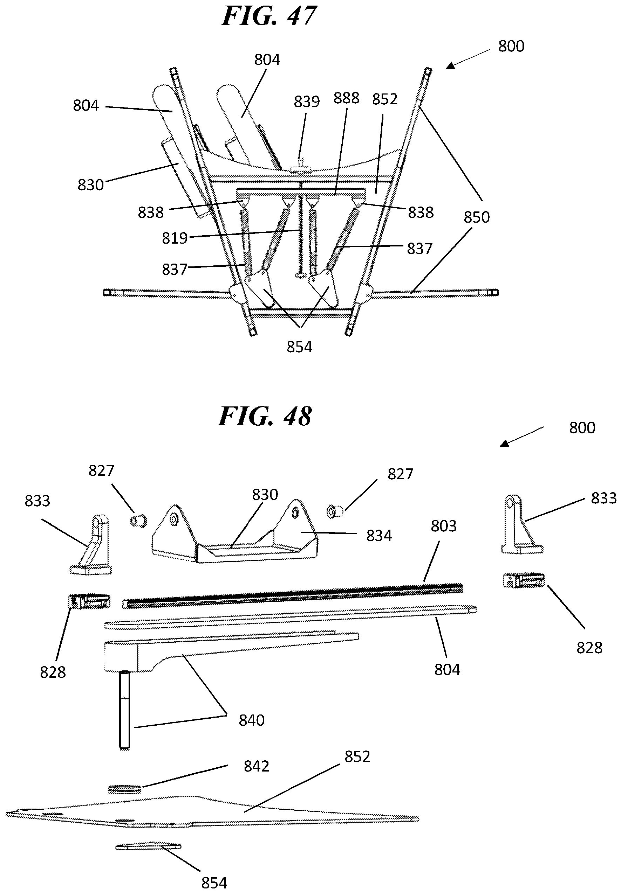

Referring to **Figs. 1-7****,** the user **110** may stand sideways on upper surface of the user board **120,** user platform **146** or a snowboard module, i.e., with shoulders parallel to horizontal axis **A-A** (as shown on **Figs. 6B-6E**). An embodiment of a snowboard module is described in detail in **Figs. 29-30** herein. Alternatively, the user **110** may stand on top of the user board **120,** user platform **146,** or a ski module facing forward, i.e., with shoulders perpendicular to the horizontal axis **A-A** (as shown on **Figs. 6A**). The body and feet positions can be varied to propel the platforms and emulate the movements encountered during different types of sporting activities.

**Fig. 2** schematically illustrates the range of motions that can be produced by the exercise device **100** of this invention. The horizontal axis of user platform **146** and user board **120** is represented by **A-A** and the vertical axis is represented by **B-B.** The vertical tilt or pivot of the user platform **146** and user board **120** around the horizontal axis **A-A** in the vertical plane and horizontal pivot of the user platform **146** and user board **120** in the horizontal plane around the vertical axis **B-B** are affected by the user's body **110** and foot positions and motions on foot mounts **130.** This combination of pivoting in the vertical plane around the horizontal axis **A-A** and pivoting in the horizontal plane around the vertical axis **B-B** can simulate "edging" produced by snowboarders, skiers and other motion sport participants. The horizontal axis **A-A** and vertical axis **B-B** are referenced throughout the descriptions of the exercise devices described herein, although they are not shown on the subsequent drawings.

Figs. **3** through **5** are schematic views showing the various movements possible by the user platform **146** and user board **120** of the exercise device of this invention. **Fig. 3** is a top plane view of the user platform **146** and user board **120** showing the range of movements of the user platform **146** and user board **120** in the horizontal plane around the vertical axis **B-B.** **Fig. 4** is an end view of the user platform **146** and user board **120** showing the range of vertical tilt or pivot movements of the user platform **146** and user board **120** in the vertical plane around the horizontal axis **A-A.** **Fig. 5** is a side view of the user platform **146** and user board **120** shown in **Fig. 2** demonstrating the range of vertical tilt or pivot movements of the user platform **146** and user board **120** in the vertical plane around the horizontal axis **A-A.**

**Figs. 6A** through **6E** show a variety of the infinite foot positions on foot mounts **130** mounted on user platform **146** or user board **120.** The overall concept of the present invention provides a means for user **110** to select foot positions on the user platform **146** and user board **120** in a number of ways to emulate various sports activities or to utilize the device for training purposes, teaching, rehabilitation, entertainment or competition.

Referring to **Fig. 7****,** the exercise device of this invention **100** may be linked to a video monitor **182** through a wireless or wired connection. User **110** is positioned on the user platform **146** and user board **120.** The movements of a user, the user platform **146** and/or of user board **120** are tracked by motion sensors, potentiometers, accelerometers, strain gauges or other electronic instruments **180** positioned on or under the user platform **146** and user board **120,** on or inside the support post (not shown), on foot mounts **130** and on any other part of the exercise device **100** and/or on the user **110** (not shown). Sensors **180** extrapolate the user's movements and relay them to a central processing unit (CPU), game console, tablet, Virtual Reality glasses, computer **181** and/or viewing monitor **182.** The means for connectivity are numerous and can be, for example, Bluetooth^{®}, Wi-Fi, and hard wired. The user **110** can also engage in online gaming in order to compete with other users, e.g., ski races, slalom races, etc. More detailed descriptions of the gaming capabilities are discussed below.

The exercise device **100** and sensors **180** can be coupled with a computer program, application ("App"), etc. to monitor activity and physical condition, e.g., calories, heartbeat, miles, time, etc. Other benefits could be realized in the form of detailed rehabilitation charts showing the physical progress of a user that is coming back from an injury.

As discussed in more detail herein, a plurality of adjustable resistance elements are mounted to the support post to control the level of resistance, velocity and angle of pivot of the user platform **146** and user board **120** in the horizontal plane around the vertical axis **B-B.** The exercise device may also include a plurality of adjustable resistance elements mounted to the user platform **146** and user board **120** to control the level of resistance, velocity and angle of pivot of the user platform **146** and user board **120** in the vertical plane around the horizontal axis **A-A.** Such adjustable resistance elements mounted to the user platform **146** or the user board **120** may include a guiding tilt mechanism that guides and controls the tilt of the user platform **146** and user board **120.** The guiding tilt mechanism can be in the form of a linkage system or guiding rails, tracks or ramps to, for example, emulate skiing or snowboarding exercise motions.

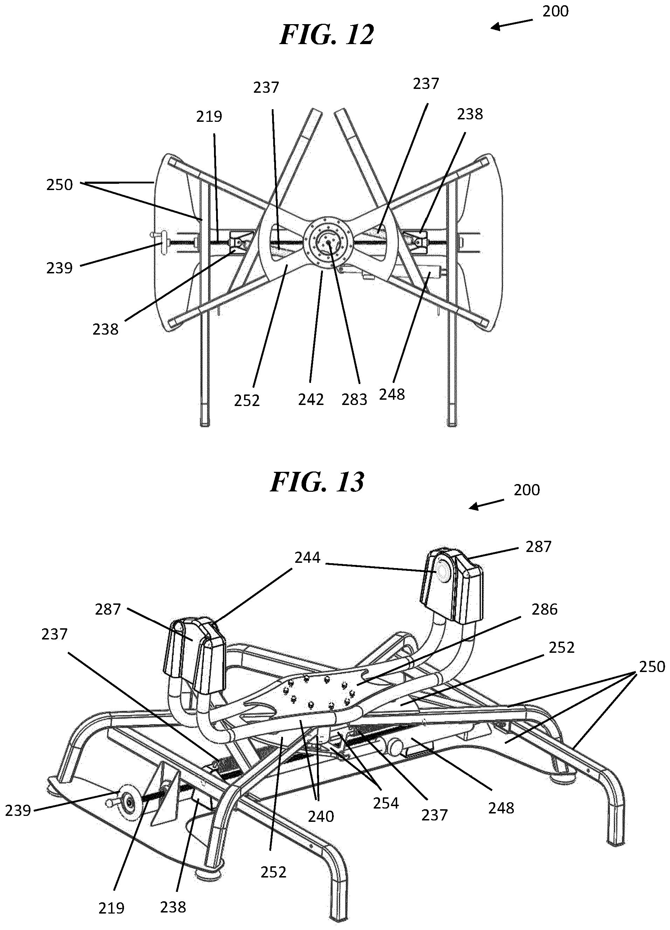

**Figs. 8** through **16** depict an embodiment of the exercise device **200** of this invention without the guiding tilt mechanism that controls the angle of vertical pivot or tilt of the user platform **246** (as shown in other embodiments herein). In this embodiment, the support post **240** can be mounted either by affixing the vertical column section to the support mount **252** (as described in **Figs. 8-11b**) or by affixing its horizontal cross bar section to the support mount **252** (as described in **Figs. 12-16**). Neither of such variations includes any guiding tilt mechanism. In both instances the principle movements are the same as described above with respect to the exercise device **100.**

### Figures 8-11b

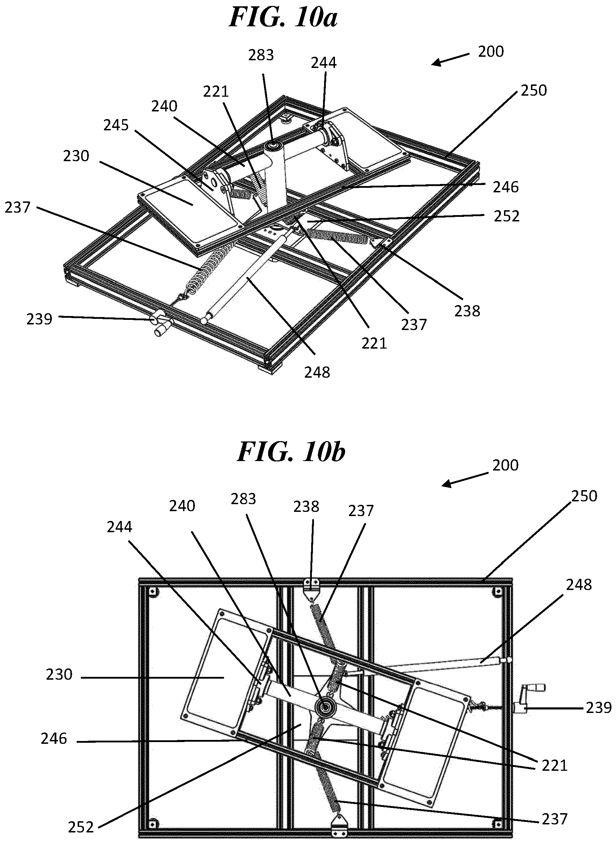

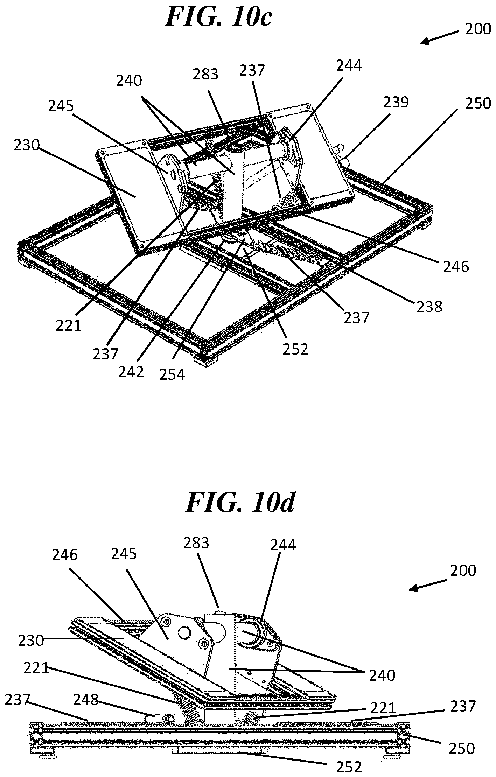

**Fig. 8** is a top view of the exercise device **200.** The user platform **246,** vertical pivots **244** or vertical plates **245** are not shown on **Fig. 8** but are depicted on the subsequent drawings in **Figs. 10a** - **10f****.** The exercise device **200** includes a base **250** with a horizontal support mount **252** to accommodate various mounting means for the support post **240.** One distinguishing feature of this embodiment is that the support post **240** is attached to the base of the machine by mounting the vertical column section of the support post **240** on top of the central horizontal pivot **242,** which is mounted on top of the support mount **252** (as further described below). Another distinguishing feature is that the vertical plates **245** with vertical pivots **244** are located on the inside of the user platform **246.**

The support post **240** in **Fig.8** (and in other subsequent iterations of the device) consists of a vertical column with the horizontal cross bar section mounted on top of it. The support post **240** is used for mounting the user platform **246** on top of the cross bar section of that support post (as shown, for example, in **Figs. 10a-10f**). A plurality of resistance elements **237,** in this embodiment springs, are mounted to the support post **240** to control the level of resistance, velocity and angle of pivot of the user platform **246** in the horizontal plane around the vertical axis **B-B.** Each horizontal resistance spring **237** is attached at one end to mounting arms **254** that co-act with the support post **240.** The other end of each horizontal resistance spring **237** is mounted to the base **250** by way of mounting members **238.** In the embodiment depicted in **Figs 8-10****,** there are three resistance elements or springs **237.** In the embodiment depicted, one of the resistance elements **237** can be adjusted by the spring adjuster **239,** to further control the level or resistance, velocity and angle of pivot of the user platform **246** in the horizontal plane around the vertical axis **B-B.**

In the embodiment depicted in **Figs. 8** (and in all other subsequent iterations of the device), a dampening piston strut **248** is also attached on one end to a mounting arm **254** and on the other end to the base **250.** Both the dampening piston strut **248** and horizontal resistance springs **237** create resistance and control in the rotation of the support post **240** to control the horizontal pivoting of the user platform **246** around the vertical axis **B-B.** Optionally, at least one or more of the resistance elements **237** may adjustable to further control the velocity and angle of pivot of the user platform **246** in the horizontal plane around the vertical axis **B-B.** The degree of resistance of the horizontal resistance springs **237** can be adjusted by extending or contracting the length of the springs by various means, including for example by a spring adjuster **239.** Optionally, the dampening element **248** is also adjustable to further control the level or resistance, velocity and angle of pivot of the user platform **246** in the horizontal plane around the vertical axis **B-B.**

Other types of resistance mechanisms (not shown) can also be used to create resistance for horizontal rotation of the user platform **246** around the vertical axis **B-B.** These mechanisms may include spring resistance mechanisms, rotary or linear dampers of various types (including magnetic, magnetic fluid, hydraulic, gas or spring), torsional springs, rubber band resistance, alternators, flywheel with various types of resistance (including magnetic, hydraulic, felt pad or other pads). These resistance mechanisms can be connected between: (a) the base **250** or horizontal support mount **252,** and (b) the mounting arms **254,** the support post **240** or user platform **246.** The mounting arms **254** are attached to the support post **240.** These mounting arms can be of various shapes and may include holes or slits.

Optionally, mounting arms **254** and/or the base **250** may be used to attach various other components to the exercise device, such as handle bars, a harness to assist the user with balancing on the device, amortization shock absorbers or rotation stoppers to soften or limit horizontal rotation of the user platform **246** at extreme points.

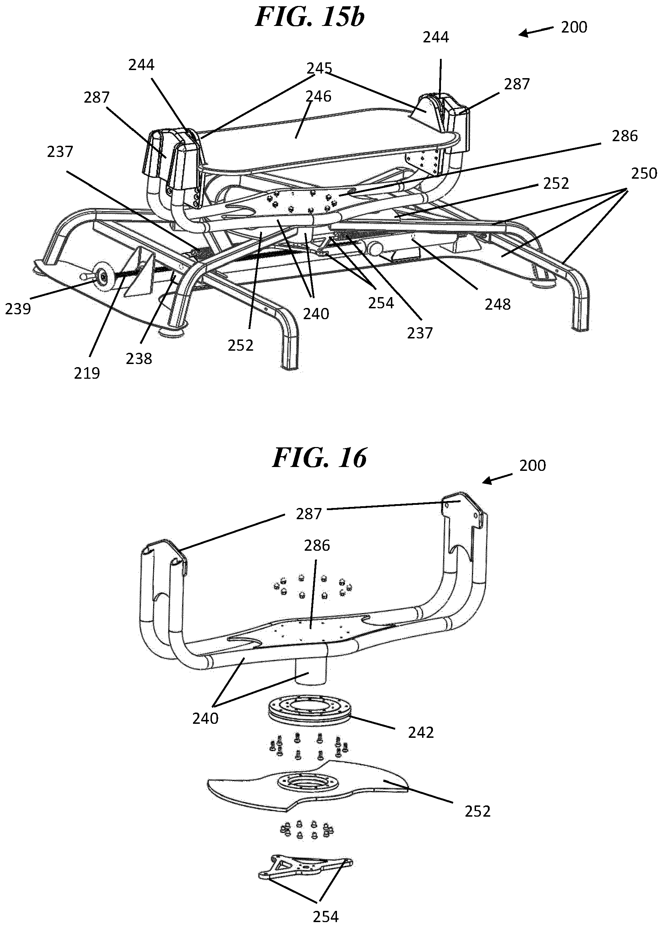

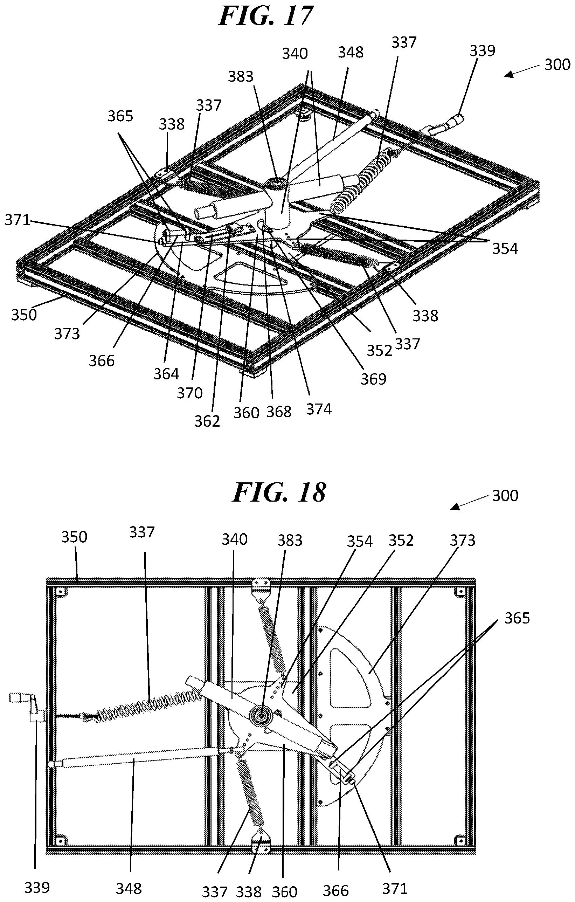

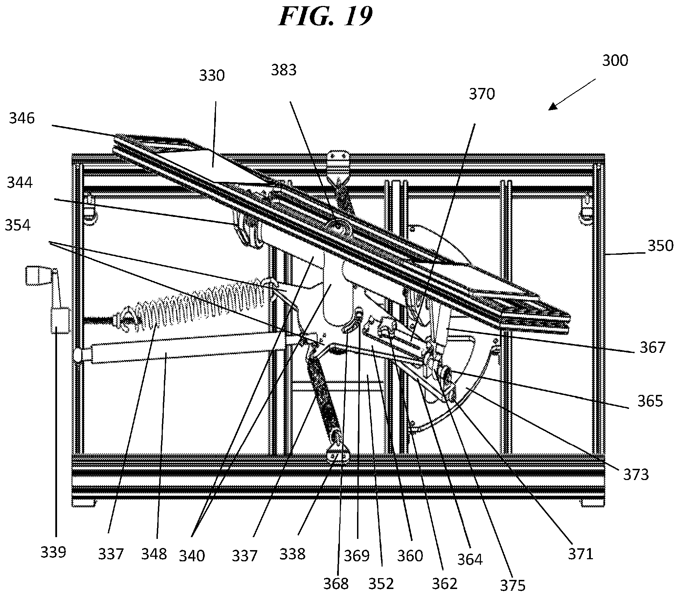

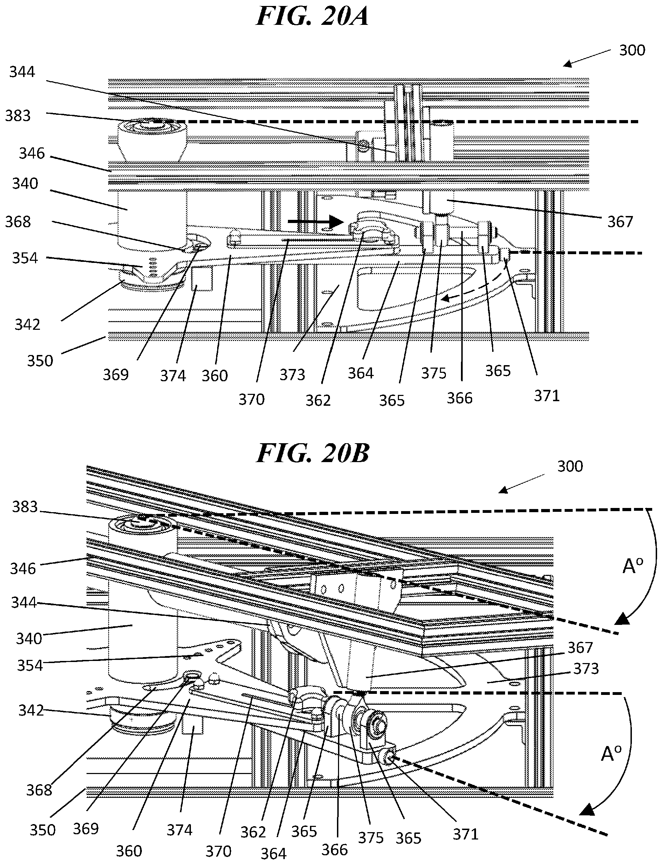

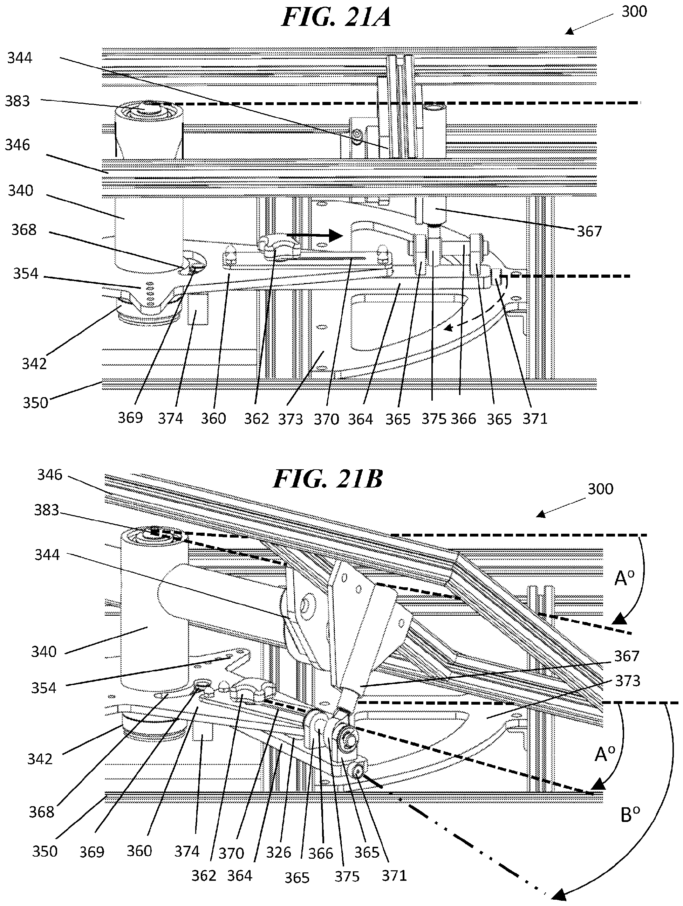

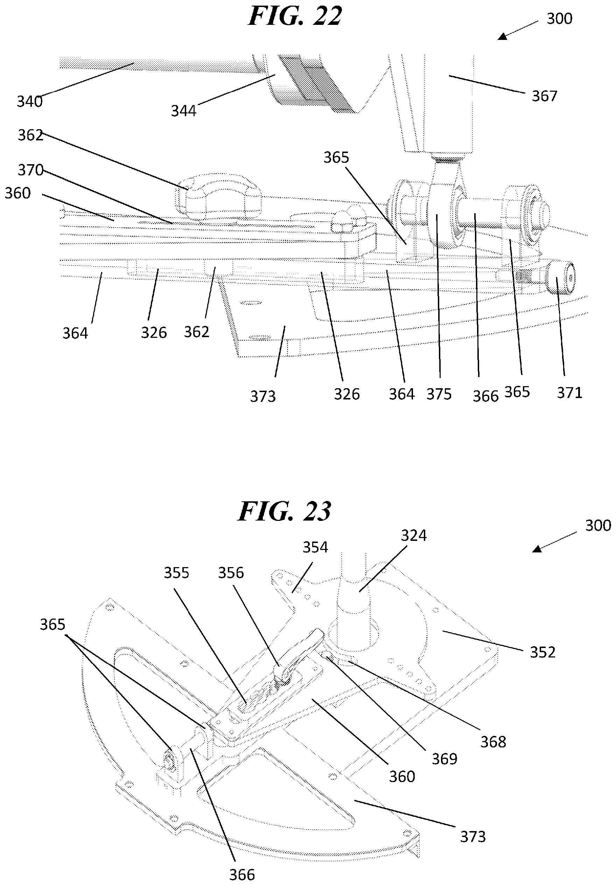

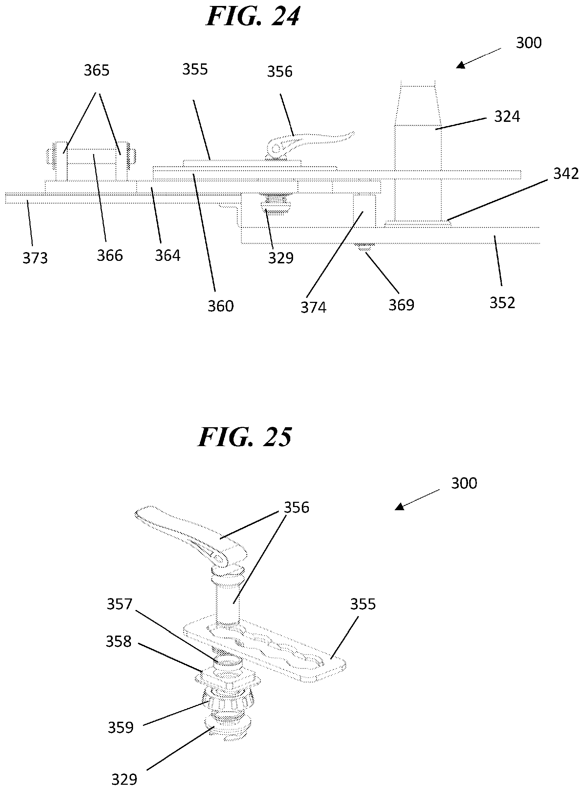

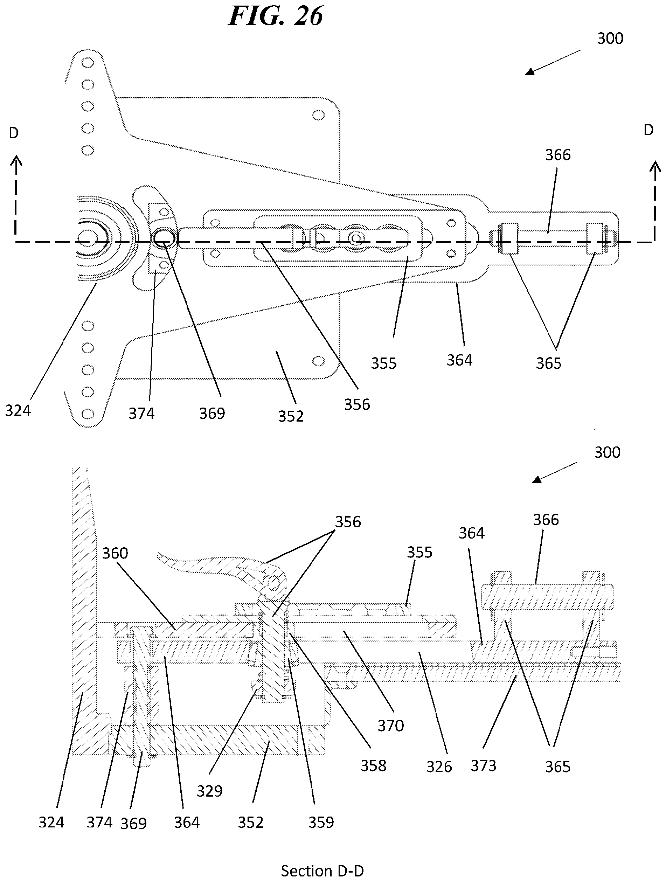

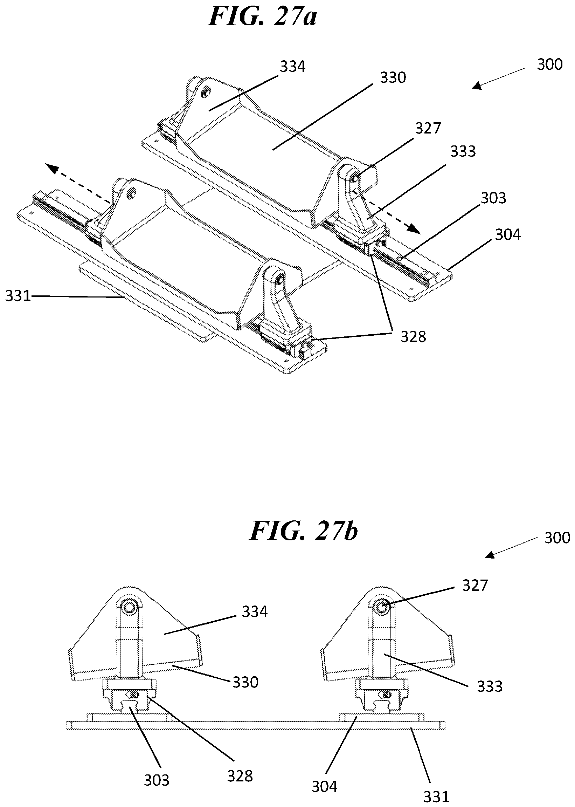

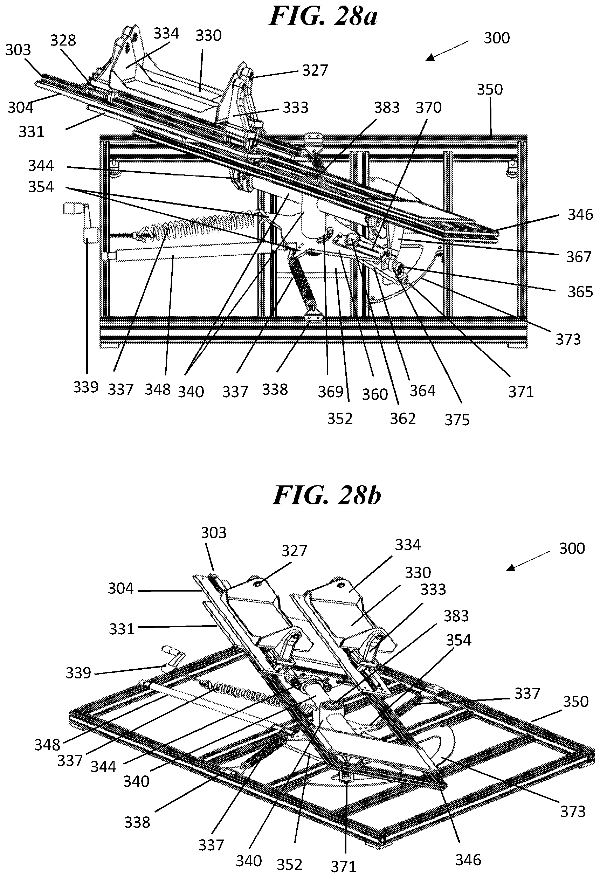

**Fig. 9** is a perspective view from the top lateral side of the exercise device showing vertical pivots **244** that are connected to the cross bar section of the support post **240.** **Fig. 9** shows the support post **240** mounted to the top of the central horizontal pivot **242** to permit rotation or pivoting in the horizontal plane around the vertical axis **B-B** as described above. Referring to **Fig. 16** for example, another embodiment of the central horizontal pivot **242** can be installed around the main shaft **224** inside the support post **240** (as seen in **Fig. 16**).

**Fig. 10a** is a perspective view from the top lateral side of the exercise device with the user platform **246** installed. The user platform **246** is mounted to the vertical plates **245.** Vertical plates **245** are attached to vertical pivots **244** at both ends of the cross bar section of the support post **240.** Vertical pivots **244** allow for the vertical tilt or pivot of the user platform **246** around the horizontal axis **A-A** as described previously.

As described in detail above, the horizontal resistance springs **237,** dampening piston strut **248** or other dampening means create resistance for horizontal rotation or pivot of the user platform **246** around the vertical axis **B-B.** Referring to **Figs. 10a-10f****,** in addition to horizontal rotation resistance, the embodiment **200** can include vertical resistance springs **221** that create resistance for vertical tilt or pivot of the user platform **246** around the horizontal axis **A-A.**

This lateral movement resistance adds extra complexity and, coupled with the rotational motion resistance, is appropriate for more experienced athletes who would like to maintain and improve their balance, increase strength and endurance required for motion sports.

One end of each vertical resistance spring **221** can be attached to mounting arms **254** or the support post **240** (or other rotating part of the device) and the other end of each vertical resistance spring **221** can be attached to the user platform **246.** Other types of resistance mechanisms (not shown) can also be used create resistance for vertical tilt or pivot of the user platform **246** around the horizontal **A-A** axis. Such resistance mechanisms could include dampening piston struts, spring resistance mechanisms, torsional springs, rotary or linear dampers of various types (including magnetic, magnetic fluid hydraulic, gas or spring), rubber band resistance, hydraulic resistance, electric motor or alternator resistance or other type of resistance mechanisms (not shown). Such resistance mechanisms can be attached between: (a) vertical plates **245,** vertical pivots **244** or user platform **246** and (b) mounting arms **254,** support post **240,** base **250,** and horizontal support mount **252** or other parts of the device.

**Fig. 10b** is a top view of the exercise device **200.** **Figs. 10c-10d** are perspective views from the top lateral side of the exercise device showing the horizontal and vertical movements of the user platform **246.** The exercise device **200** creates "carving" simulation through the combination of lateral tilt or pivot (to simulate pronation and supination "edging" movement in skiing or hill to toe movement in snowboarding) and horizontal rotation movement. It uses a synergistic balance of resistance elements described herein and pivot points between the base, the support post and user platform to create a smooth, realistic simulation of the real world movements in motion sport activities.

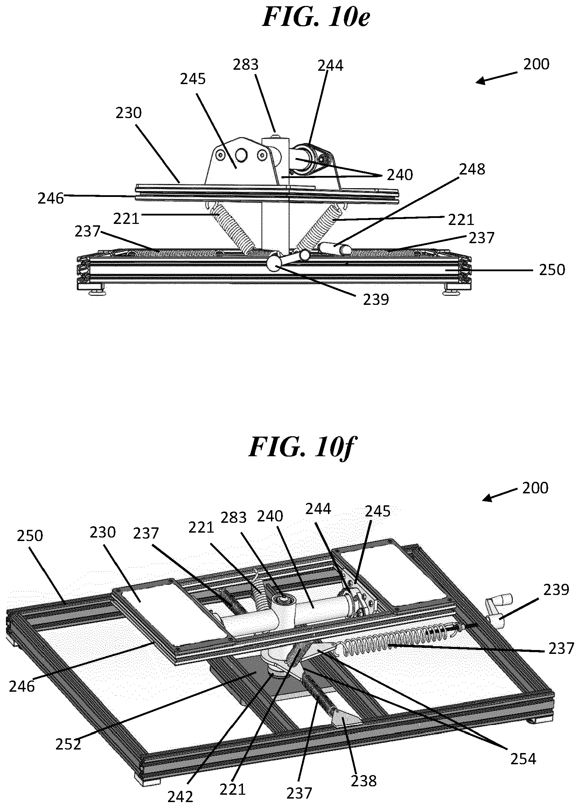

Another feature of the exercise device **200** is that the user platform **246** can be moved up and down the vertical plates **245** to create more or less stability of the user platform **246** around the horizontal **A-A** axis. A user can move the user platform **246** up the vertical plates **245** to reduce stability and make the exercise more challenging, or down to increase stability. **Figs. 10e** and **10f** are showing the views of the exercise device **200** with the user platform **246** moved all the way down to the bottom and up to the top of the vertical plates **245.**

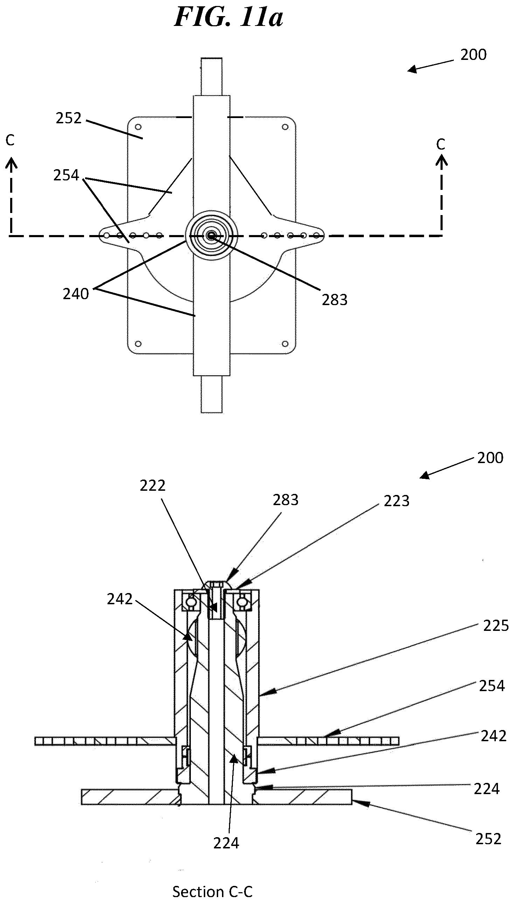

**Fig. 11a** is a top view and a cross sectional view taken along line **C-C** of the top view of vertical column the support post **240.** The support post **240** consists of a vertical column **225** that is rotationally mounted on top of the main shaft **224** and held in place by hex drive screw **222** that is thread through washer **223.** Central horizontal pivots **242** are located at the bottom of the vertical column **225** and inside of the vertical column **225** around the main shaft **224** to create rotation in the horizontal plane around the vertical axis **B-B** as described above. The main shaft **224** is mounted on top of the horizontal support mount **252.** A potentiometer (not shown) may be mounted on top of the support post **240.**

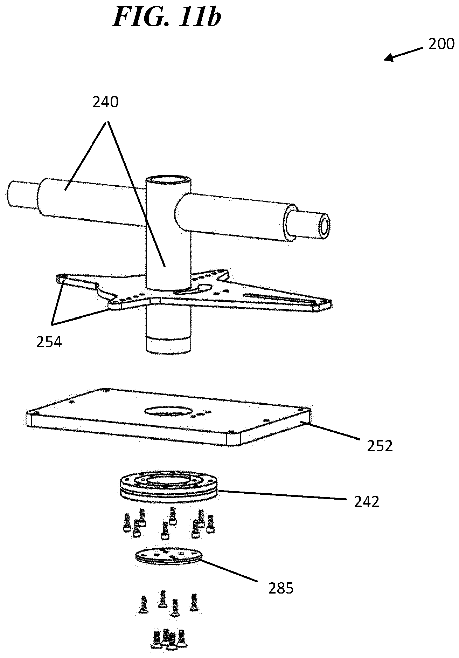

**Fig. 11b** is an alternative configuration of the support post **240** and central pivot **242.** This embodiment of the support post **240** consists of a vertical column section and cross bar section. The vertical column section of the support post **240** is mounted on top of the central pivot **242,** which consists of a donut shaped bearing. The outside ring of the donut bearing **242** is mounted on the horizontal support mount **252.** The vertical column section of the support post **240** is pressed into the inside ring of the donut bearing **242.** Additional support is created by the vertical column connector **285** that is bolted to the bottom of donut bearing **242.** Alternatively, the donut shaped central pivot **242** can be included between the cross bar section and vertical column section of the support post **240** (not shown).

### Figures 12-16

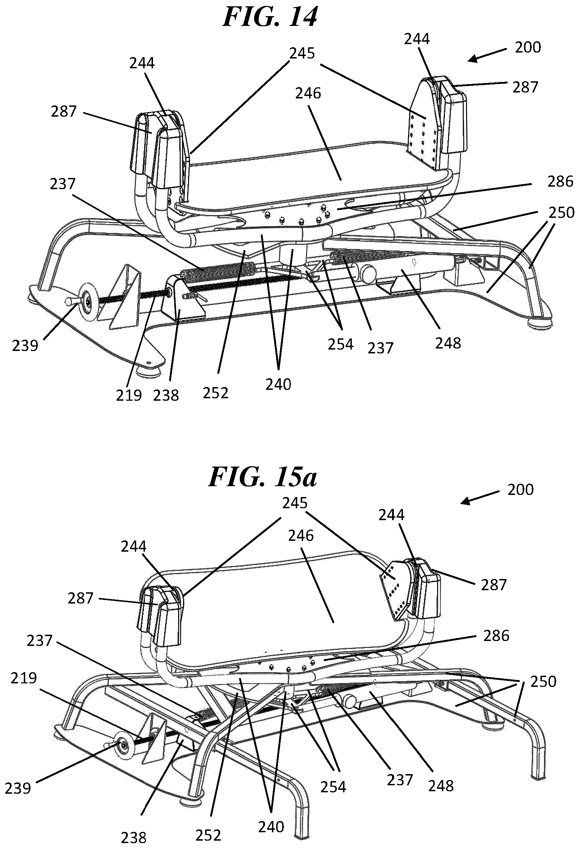

The embodiment shown on **Figs.12-16** has several distinguishing features that differentiate it from the prior embodiment in **Figs. 8-11****.** First, instead of mounting the vertical column section of the support post **240** to the base **250,** the support post **240** is attached to the base **250** by mounting its horizontal bar section on top of the central horizontal pivot **242,** which is mounted on top of the support mount **252.** Second, the horizontal bar section of the support post **240** is U-shaped (pointing upwards) and permits the mounting of vertical plates **245** and vertical pivots **244** to the outside of a user platform **246** (as seen in **Figs. 14** **&** **15**).

**Fig. 12** is a top view of the exercise device **200.** The support post **240,** user platform **246,** vertical pivots **244,** vertical plates **245** and several other elements are not shown on **Fig.12** but are depicted on subsequent drawings in **Figs.13-16****.** The exercise device **200** includes a base **250** with a horizontal support mount **252** to accommodate various mounting means for the support post **240** (as further described below). Adjustable resistance elements **237** are mounted to the support post **240** to control the level of resistance, velocity and angle of pivot of the user platform **246** in the horizontal plane around the vertical axis **B-B** (as seen in **Figs. 14** and **15a****,** **15b**). These springs are adjusted by the spring adjuster **239** and lead screw **219.** In the embodiment depicted, a dampening piston strut **248** is also attached on one side to the mounting arms **254** and on the other side to the base **250.** Horizontal pivot **242** is attached on top of the support mount **252.**

**Fig. 13** is a side lateral view of the device showing the exercise device **200** with the same elements as described in **Fig.12****.** In addition, it includes the support post **240** consisting of a U-shaped horizontal cross bar section, which is mounted on top of a vertical column. The horizontal cross bar section includes vertical pivots **244** on both ends. The horizontal cross bar section the support post **240** can be of various shapes or forms. In this embodiment, the horizontal cross bar section is an assembly consisting of two curved bars that are held together by vertical pivot connector plates **287** and cross bar connector plate **286.** The cross bar connector plate **286** is used for purposes of mounting the U-shaped horizontal cross bar section on top of the horizontal pivot **242.** The vertical column section is threaded through the horizontal pivot **242** and includes mounting arms **254** that are attached to the bottom of that vertical column. These mounting arms can be of various shapes and may include holes or slits. As further described below, the support post **240** is used for purposes of mounting the user platform **246.**

**Fig. 14** is a side lateral view of the device showing the exercise device **200** with the same elements as described in **Fig.12** and **13****.** In addition, it includes the user platform **246** mounted between vertical plates **245.** Vertical plates **245** are attached to vertical pivots **244** at both ends of the cross bar of the support post **240.** Vertical pivots **244** allow for the vertical tilt or pivot of the user platform **246** around the horizontal axis **A-A.** This figure is showing in more detail various resistance elements that control the level of resistance, velocity and angle of pivot of the user platform **246** in the horizontal plane around the vertical axis **B-B.** Each horizontal resistance spring **237** is attached on one end to mounting arms **254** at the bottom the support post **240.** The other end of the horizontal resistance springs **237** is mounted to sliding mounting members **238** that are moving along the lead screw **219.** These resistance elements **237** are adjustable by extending or contracting the length of the springs along the lead screw **219** by various means, including by the spring adjuster **239.** In the embodiment depicted, a dampening piston strut **248** is also attached on one side to the mounting arms **254** and on the other side to the base **250.** Both the dampening piston strut **248** and horizontal resistance springs **237** create resistance and control in the rotation of the support post **240** to control the horizontal pivoting of the user platform **246** around the vertical axis **B-B.** Optionally, the dampening element **248** is also adjustable to further control the level or resistance, velocity and angle of pivot of the user platform **246** in the horizontal plane around the vertical axis **B-B.**

Other types of resistance mechanisms (not shown) can also be used create resistance for horizontal rotation of the user platform **246** around the vertical axis **B-B.** These mechanisms may include spring resistance mechanisms, torsional springs, rotary or linear dampers of various types (including magnetic, magnetic fluid, hydraulic, gas or spring), rubber band resistance, alternators, flywheel with various types of resistance (including magnetic, hydraulic, felt pad or other pads). These resistance mechanisms can be connected between: (a) the base **250** or horizontal support mount **252** and (b) the mounting arms **254,** support post **240** or user platform **246.**

Various types of resistance mechanisms (not shown) can be used create resistance for vertical tilt or pivot of the user platform **246** around the horizontal **A-A** axis. They could include dampening piston struts, spring resistance mechanisms, torsional springs, rotary or linear dampers of various types (including magnetic, magnetic fluid hydraulic, gas or spring), rubber band resistance, hydraulic resistance, electric motor or alternator resistance or other type of resistance mechanisms (not shown). Such resistance mechanisms can be attached between: (a) vertical plates **245,** vertical pivots **244,** or user platform **246,** and (b) mounting arms **254,** support post **240,** base **250,** and horizontal support mount **252** or other parts of the device.

Optionally, mounting arms **254** and/or the base **250** may be used to attach various other components to the exercise device, such as handle bars, a harness to assist the user with balancing on the device, amortization shock absorbers or rotation stoppers to soften or limit horizontal rotation of the user platform **246** at extreme points.

**Fig. 15a** and **15b** are additional views of the device. **Fig. 15a** is a top lateral side of the exercise device showing the movement of the user platform **246** vertically and horizontally. The exercise device **200** creates "carving" simulation through the combination of vertical tilt or pivot (to simulate pronation and supination "edging" movement in skiing or hill to toe movement in snowboarding) and horizontal rotation movement. It uses a synergistic balance of resistance elements described herein and pivot points between the base, the support post and user platform to create a smooth, realistic simulation of the real world movements in motion sport activities. The user platform **246** can be moved up and down the vertical plates **245** to create more or less stability of the user platform **246** around the horizontal **A-A** axis. A user can move the user platform **246** up the vertical plates **245** to reduce stability and make the exercise more challenging, or down to increase stability. **Fig. 15b** is another side view of the exercise device **200** with the user platform **246** moved up to the top of the vertical plates **245.**

**Fig. 16** is an exploded perspective of the support post **240** in this embodiment **200.** The support post **240** consists of a vertical column with a U-shaped horizontal cross bar section mounted on top of it. The horizontal cross bar section can be of various shapes or forms. In this embodiment, the horizontal cross bar section is an assembly consisting of two substantially parallel U-shaped curved bars that are secured together by vertical pivot connector plates **287** mounted at the ends of such curved bars and a cross bar connector plate **286** in the center of the u-shape. Vertical pivots **244** are pivotally mounted to each vertical pivot connector plate **287.** The central pivot **242** is represented by a donut bearing and the vertical column section of the support post **240** is threaded through the center of the central pivot **242.** The outside ring of the central pivot **242** donut bearing is mounted to the cross bar connector plate **286** and therefore connects the central pivot **242** to the horizontal cross bar section of the support post **240.** The inside ring of the central pivot **242** donut bearing is mounted to the horizontal support mount **252,** which in turn is mounted to the base **250.** The mounting arms **254** that are attached to the bottom of that vertical column after it is threaded through the center of the central pivot **242.**

### Safety rails, handles, bars or poles

Any embodiment of the device **100** through to **200** may include safety rails, handles, bars or poles, which could be removable or adjustable. Such safety rails, handles, bars or poles can be stationary attached to any part of the device **100** through to **200,** including the base (described as **250** on the drawings included herein) or horizontal support mount (described as **252** on the drawings included herein). Safety rails, handles, bars or poles can also be attached to any horizontally rotating part of the device so that they rotate horizontally around **B-B** axis with a user of the device and user platform. For example, safety rails, handles, bars or poles can be attached to the mounting arms (described as **254** on the drawings included herein) or directly to support post (described as **240** on the drawings included herein). The safety rails, handles, bars or poles may incorporate controls or buttons (not shown) for gaming to control the video games or other electronic interfaces with the device, as further described herein. The safety rails, handles, bars or poles may be positioned along the exercise device for snowboarding stance or perpendicular to the exercise device for skiing stance. In addition, the safety rails, handles, bars or poles may be used to attach a harness that would assist the user with balancing on the device (not shown).

The device may also include an electronic control panel or touch screen to control the degree of lateral tilt or pivot and horizontal rotation resistance. This can be done by choosing the appropriate levels or by selecting pre-programmed modes that would automatically adjust the level of tilt and resistance throughout the ride and during the chosen exercise time. The panel would also have standard indicators such as time, calories lost, level of resistance and tilt etc.

Each of embodiments of the device **100** through to **200** can be transformed into a gaming controller device by fitting it with motion sensors, potentiometers, accelerometers, strain gauges, weight sensor, pressure sensors or other electronic instruments. These instruments can be attached to or incorporated in any part of the device **100** through to **200** (including under or within the foot pads, on or within the user frame or base of the devise, on or inside the support post etc.) and can capture the athlete's body movements, level of intensity, changes in the rate of motion, weight transfer and balance and transform them into electronic signals that can control video games and transmit them on a video panel, monitor or Virtual Reality glasses.

Each embodiment of the exercise device described herein creates "carving" simulation through the combination of lateral tilt or vertical pivot (to simulate "edging" motion, i.e., hill to toe movement used in snowboarding or pronation and supination movement used in alpine skiing) and horizontal rotation movement. It uses a synergistic balance of resistance elements, (e.g., dampening piston struts, springs or other dampening means described herein) and pivot points between the base, the support post and user platform to create a smooth, realistic simulation of the real world movements in motion sport activities.

Broadly, the exercise device of this invention allows recreational athletes to engage in an intense cardio and muscle-building activity. Users exercise their lateral abdominal, lower back and leg muscles by making broad left and right turns with their torso. In addition, they can control the tilt of the user platform and the resistance level of their turns. As the angle of tilt increases, the machine naturally forces the users into a position that automatically engages their core, quads, glutes, and hamstring and calve muscles. By increasing the level of turn resistance, athletes can amplify the level of intensity of the workout. The users can also change their stance on the user platform, for example from a snowboarding stance, to a surfing stance or skiing stance. This adds variation to the exercise keeping the user engaged for a longer period of time, making the exercise less boring and allows the user to target the muscle groups from different angles. Custom designed exercise routines and or programs can be created for the athletes that utilize the unique movements produced by the exercise device to train the upper body muscles, including chest, shoulder and triceps muscles. As a result, the machine offers an exhausting full body workout to recreational users.

Other users engaged in motion sports, such as skiing, snowboarding, surfing, skateboarding, water skiing, wakeboarding or kite boarding can reap tremendous benefits from the exercise device of this invention. There are few athletes that have daily access to training in these sports, typically requiring travel to warmer or colder destinations. The cost of travel and hotel expenses and daily job commitments prevent most motion sport enthusiasts from engaging in these activities more than once or twice per year. Even those, who can indulge in motion sports more often, are constrained by shorter seasons and unpredictable weather patterns. As a result, many recreational participants engage in these sports without proper conditioning and spend most of their trip on dealing with muscle soreness and discomfort.

The exercise device simulates the movements produced by motion sport athletes and is designed to provide a workout that maintains muscle conditioning, improves balance, stability and endurance that are necessary for motion sports. In any embodiment of the exercise, by changing the position of foot mounts on the user platform or board, the user can select the stance that corresponds to the applicable motion sport. They can attach the foot mounts along the horizontal **A-A** axis in parallel, "duck" or other stance that is customary used on snowboarding, skateboarding, wakeboarding or kite boarding (see **Figs. 6C-6E**). Or they can move the foot mounts further apart and attach them on an angle that produces the required stance for surfing (see **Fig. 6B**). Alternatively, the athletes can attach the foot mounts to one end of the machine while facing the other end to replicate downhill skiing or water skiing position (see **Fig. 6A**).

For alpine sports enthusiasts, the lateral and rotational movements of the machine simulate the motion, whereas adjustments to the tilt and level of rotational resistance simulate the steepness of the hill and level of intensity. The users are able to use their body movement to control the width and angle of each turn.

A number of medical conditions and neurological disorders, such as Vertigo or Parkinson disease, multiple sclerosis or stroke may cause patients to experience some difficulty with balance or produce spinning sensation and thus put patients at risk of falling, affect their quality of life and interfere with their level of activity. The device can be used to introduce balance re-training into the therapy program. The motion of swaying and turning on the machine helps patients to gain better control of their body and reduce risk of falls. By gradually increasing the tilt and resistance of the machine, patients can further improve their balance, coordination, concentration, strength and reflexes.

Physical therapists or doctors can incorporate the machine into their treatment plans that aim to improve strength, flexibility and range of motion of people who suffered from knee and ankle injuries or are recovering from injuries to their quads, glutes, and hamstrings or calve muscles and therefore require balance and strength exercises to get back in shape. The device allows to reduce joint and muscle impairments and increase joint and muscle mobility and function.

The most difficult obstacles to the continuing usage of any exercise equipment are boredom and repetitiveness. Introducing fun into any fitness activity can remove these obstacles and motivate the athletes to engage in physical exercise. The exercise device of this invention can be used as a gaming controller that, when connected to a computer and video panel, monitor or Virtual Reality glasses, would allow users to transform their motions into electronic signals that control video games. The exercise device users will be able to combine their workouts with different video games, such as hover board races, skateboard contests, air fights, alpine or water sports races and obstacle runs. The users could choose levels depending on their fitness ability and engage in simulated skiing, snowboarding, skateboarding, wakeboarding, water skiing, kite boarding or surfboarding through various obstacles and terrains on video screens. Video games can provide athletes with instant visual feedback on their movements and improve their concentration, strength and reflexes. The video games combined with this exercise device can serve as strong drivers to motivate people to be more active and improve their fitness. In addition to a single mode, the exercise device will have capabilities to operate in a multiplayer mode or in a social competition mode that would allow athletes to compete with each other or other people online. Thus, exercise device will remove the strain of physical activity from athletes' conscience and allow them to exercise longer and more often. Additionally, the exercise device can be combined with video classes and specific exercise programs of various degrees of difficulty in order to enhance user experience. Such classes or programs can be either streamed live or downloaded and viewed on a video panel, monitor or Virtual Reality glasses.

The invention is defined by the appended claims.

### ELEMENTS

### Figs. 1-7

| **Part No.** | **Element** |
|---|---|
| **100** | Exercise device |
| **110** | User |
| **120** | Board on top of the user platform **146** |
| **130** | Foot mounts for foot placement positions on board **120.** Alternatively, the foot mounts can be mounted directly on top of the user platform (when the device is used without any board **120** placed on top of the user platform **146**). |
| **146** | user platform mounted on top of support post (not shown). |
| **150** | Base (on ground). |
| **A-A** | Horizontal axis |
| **B-B** | Vertical axis |
| **180** | Sensors for gaming, physical data, motion data, which can be placed on the user platform **146,** user board **120,** support post or other parts of the device. |
| **181** | CPU - Game console - tablet - Virtual Reality glasses - computer - wired or wireless |
| **182** | Video monitor for viewing |

### Figs. 8-16

| **Part No.** | **Element** |
|---|---|
| **200** | Exercise device |
| **219** | Lead screw |
| **221** | Vertical resistance springs that create resistance for lateral tilt or pivot of the user platform **246** around the horizontal **A-A** axis. |
| **222** | Hex drive screw |
| **223** | Washer |
| **224** | Main shaft used for purposes of mounting the outer tube of the vertical column section of the support post **240** |
| **225** | Vertical column section of the support post **240** |
| **230** | Foot mounts |
| **237** | Horizontal resistance springs to modulate horizontal rotational movements of user platform **246** around the vertical axis **B-B** |
| **238** | Mounting members that attach horizontal resistance springs **237** to the base **250** (as in **Figs. 8-11**) or that are sliding along the lead screw **219** (as in **Figs. 12-16**) |
| **239** | Spring adjuster (including a crank with lead screw or other mechanism) adjusting the length of horizontal resistance springs **237** |
| **240** | Support post - interface between base **250** and user platform **246.** The support post **240** consists of a vertical column section and horizontal cross bar section mounted on top of the vertical column section. The support post **240** rotates in the horizontal plane around the vertical axis **B-B** by means of the central horizontal pivot **242.** The support post **240** and central horizontal pivot **242** are mounted on horizontal support mount **252** or they can be mounted directly on base **250.** |
| **242** | Central horizontal pivot that creates rotation of the support post **240** (and of the user platform **246** attached to it) in horizontal plane around the vertical axis **B-B.** The central pivot can be located either below or inside the vertical column section of the support post **240** or between the horizontal cross bar section and vertical column section of the support post **240.** |
| **244** | Vertical pivots that create lateral tilt or pivot of the user platform **246** around the horizontal axis **A-A.** |
| **245** | Vertical bars mounted on the vertical pivots **244.** The user platform **246** is attached to these vertical bars. |
| **246** | User platform |
| **248** | Dampening piston struts-dampers to modulate horizontal rotational movements of user platform **246** around the vertical axis **B-B** |
| **250** | Base to which horizontal support mount **252,** support post **240** and associated other parts above are mounted. The base may include wheels on one side for transport & storage. |
| **252** | Horizontal support mount for the support post **240** & associated other parts above |
| **254** | Mounting arms with holes or slits to attach dampers **248** or springs, elastic bands, or other types of resistance as further described herein to control resistance of horizontal movement of the device around the vertical **B-B** axis. The mounting arms can also be used to attach safety rails, handles, bars or poles. |
| **283** | Potentiometer on top of the support post **240** or on top of the connection that connects the support post **240** to central horizontal pivot **242** |
| **285** | Vertical column connector |
| **286** | Cross bar connector plate |
| **287** | Vertical pivot connector plates |

## Claims

1. A multipurpose exercise device (200) for replicating exercise motions for a user for a plurality of sports and physical therapy comprising:
a. a base (250) having an upper surface and lower surface, the lower surface configured to rest on a substantially horizontal support surface;
b. a user platform (246) having a lower surface and an upper surface upon which the user stands;
**characterised by**
c. a support post (240) having an upper section and a lower section, either the upper or the lower section of the support post (240) mounted to the base (250) to axially pivot on the base (250), the user platform (246) pivotally mounted to a section of the support post (240) such that the upper surface of the user platform (246) is at or below an axis about which the user platform (246) pivots relative to the support post (240), wherein the user platform (246) pivots with the support post (240) in a horizontal plane parallel to the substantially horizontal support surface, and the user platform (246) pivots on the support post (240) in a vertical plane perpendicular to the substantially horizontal support surface; and
d. at least one resistance element (237, 248), each resistance element having a first end and a second end, the first and mounted to the support post (240) and the second end mounted to the base (250) to control the level of resistance, velocity and angle of pivot of the user platform (246) in the horizontal plane; and
wherein the exercise device (200) is configured such that, in use, the user stands on the upper surface of the user platform (246) and performs exercise motions to propel the user platform (246) to pivot in the horizontal plane and the vertical plane.

2. The multipurpose exercise device of Claim 1, wherein the exercise device replicates motions for snowboarding.

3. The multipurpose exercise device of Claim 2, including a single planar user platform having a first end and a second end pivotally supported on vertical pivots mounted to the support post to permit a single planar user platform to pivot in a vertical plane perpendicular to the substantially horizontal support surface; and
wherein, in use, the user stands on the single planar user platform and performs snowboarding exercise motions to propel the user platform to pivot in the horizontal plane and the vertical plane.

4. The multipurpose exercise device of any preceding Claim, wherein the resistance elements(s) comprise at least one dampening element having a first end and a second end, the first mounted to the support post and the second end mounted to the base to control the level of resistance, velocity and angle of pivot of the user platform in a horizontal plane.

5. The multipurpose exercise device of any preceding Claim, wherein at least one of the resistance elements has a first end mounted to the base or to the support post, and a second end mounted to the user platform, to control the level of resistance, velocity and angle of pivot of the user platform in the vertical plane.

6. The multipurpose exercise device of Claim 5, wherein the resistance element(s) for controlling the level of resistance, velocity and angle of pivot of the user platform in the vertical plane comprise at least one dampening element having a first end mounted to the user platform and a second end mounted to the base or to the support post to control the level of resistance, velocity and angle of pivot of these a platform in the vertical plane.

7. The multipurpose exercise device of any preceding Claim, wherein the user platform is in digital communication with a computer processing unit for transmitting position and motion data to the computer processing unit for processing into an interactive experience for the user.

## Patentansprüche

1. Eine Mehrzweck-Übungsvorrichtung (200) zum Replizieren von Übungsbewegungen für einen Benutzer für eine Vielzahl von Sportarten und Physiotherapie, umfassend:
a. eine Basis (250), die eine obere Oberfläche und eine untere Oberfläche aufweist, wobei die untere Oberfläche dazu konfiguriert ist, auf einer im Wesentlichen horizontalen Stützoberfläche zu liegen;
b. eine Benutzerplattform (246), die eine obere Oberfläche und eine untere Oberfläche aufweist, worauf der Benutzer steht;
**gekennzeichnet durch**
c. ein Stützbein (240), das ein oberes Teilstück und ein unteres Teilstück aufweist, wobei entweder das obere oder das untere Teilstück des Stützbeins (240) an der Basis (250) befestigt ist, um axial auf der Basis (250) zu schwenken, wobei die Benutzerplattform (246) an einem Teilstück des Stützbeins (240) schwenkbar befestigt ist, sodass die obere Oberfläche der Benutzerplattform (246) an oder unter einer Achse liegt, um die die Benutzerplattform (246) relativ zu dem Stützbein (240) schwenkt, wobei die Benutzerplattform (246) mit dem Stützbein (240) in einer horizontalen Ebene schwenkt, die zu der im Wesentlichen horizontalen Stützoberfläche parallel ist, und die Benutzerplattform (246) auf dem Stützbein (240) in einer vertikalen Ebene schwenkt, die zu der im Wesentlichen horizontalen Stützoberfläche senkrecht ist; und
d. mindestens ein Widerstandselement (237, 248), wobei jedes Widerstandselement ein erstes Ende und ein zweites Ende aufweist, wobei das erste Ende an dem Stützbein (240) befestigt ist und das zweite Ende an der Basis (250) befestigt ist, um das Niveau des Widerstands, die Geschwindigkeit und den Schwenkwinkel der Benutzerplattform (246) in der horizontalen Ebene zu steuern; und
wobei die Übungsvorrichtung (200) so konfiguriert ist, dass bei Verwendung der Benutzer auf der oberen Oberfläche der Benutzerplattform (246) steht und Übungsbewegungen durchführt, um die Benutzerplattform (246) anzutreiben, um in der horizontalen Ebene und der vertikalen Ebene zu schwenken.

2. Mehrzweck-Übungsvorrichtung nach Anspruch 1, wobei die Übungsvorrichtung Bewegungen für Snowboarding repliziert.

3. Mehrzweck-Übungsvorrichtung nach Anspruch 2, die eine einzelne ebene Benutzerplattform einschließt, die ein erstes Ende und ein zweites Ende aufweist, die schwenkbar auf vertikalen Schwenkgliedern gestützt sind, die an dem Stützbein befestigt sind, um einer einzelnen ebenen Benutzerplattform zu gestatten, in einer vertikalen Ebene zu schwenken, die zu der im Wesentlichen horizontalen Stützoberfläche senkrecht ist; und
wobei bei Verwendung der Benutzer auf der einzelnen ebenen Benutzerplattform steht und Snowboarding-Übungsbewegungen durchführt, um die Benutzerplattform anzutreiben, um in der horizontalen Ebene und der vertikalen Ebene zu schwenken.

4. Mehrzweck-Übungsvorrichtung nach einem vorhergehenden Anspruch, wobei das/die Widerstandselement(e) mindestens ein Dämpfungselement umfasst/umfassen, das ein erstes Ende und ein zweites Ende aufweist, wobei das erste an dem Stützbein befestigt ist und das zweite Ende an der Basis befestigt ist, um das Niveau des Widerstands, die Geschwindigkeit und den Schwenkwinkel der Benutzerplattform in einer horizontalen Ebene zu steuern.

5. Mehrzweck-Übungsvorrichtung nach einem vorhergehenden Anspruch, wobei mindestens eines der Widerstandselemente ein erstes Ende aufweist, das an der Basis oder an dem Stützbein befestigt ist, und ein zweites Ende aufweist, das an der Benutzerplattform befestigt ist, um das Niveau des Widerstands, die Geschwindigkeit und den Schwenkwinkel der Benutzerplattform in der vertikalen Ebene zu steuern.

6. Mehrzweck-Übungsvorrichtung nach Anspruch 5, wobei das/die Widerstandselement(e) zum Steuern des Niveaus des Widerstands, der Geschwindigkeit und des Schwenkwinkels der Benutzerplattform in der vertikalen Ebene mindestens ein Dämpfungselement umfasst/umfassen, das ein erstes Ende aufweist, das an der Benutzerplattform montiert ist, und ein zweites Ende aufweist, das an der Basis oder an dem Stützbein montiert ist, um das Niveau des Widerstands, die Geschwindigkeit und den Schwenkwinkel der Plattform in der vertikalen Ebene zu steuern.

7. Mehrzweck-Übungsvorrichtung nach einem vorhergehenden Anspruch, wobei die Benutzerplattform in digitaler Kommunikation mit einer Rechnerverarbeitungseinheit zum Übertragen von Positions- und Bewegungsdaten an die Rechnerverarbeitungseinheit zum Verarbeiten in eine interaktive Erfahrung für den Benutzer steht.

## Revendications

1. Dispositif d'activité physique (200) polyvalent destiné à copier des mouvements d'activité physique pour un utilisateur pour une pluralité de sports et une thérapie physique comprenant :
a. une base (250) ayant une surface supérieure et une surface inférieure, la surface inférieure étant configurée pour reposer sur une surface de support sensiblement horizontale ;
b. une plateforme d'utilisateur (246) ayant une surface inférieure et une surface supérieure sur laquelle se tient l'utilisateur ;
**caractérisé par**
c. un montant de support (240) ayant une section supérieure et une section inférieure, la section supérieure ou la section inférieure du montant de support (240) étant montée sur la base (250) pour pivoter axialement sur la base (250), la plateforme d'utilisateur (246) étant montée pivotante sur une section du montant de support (240) de sorte que la surface supérieure de la plateforme d'utilisateur (246) se trouve au niveau ou au-dessous d'un axe autour duquel la plateforme d'utilisateur (246) pivote par rapport au montant de support (240), dans lequel la plateforme d'utilisateur (246) pivote avec le montant de support (240) dans un plan horizontal parallèle à la surface de support sensiblement horizontale, et la plateforme d'utilisateur (246) pivote sur le montant de support (240) dans un plan vertical perpendiculaire à la surface de support sensiblement horizontale ; et
d. au moins un élément de résistance (237, 248), chaque élément de résistance ayant une première extrémité et une deuxième extrémité, la première extrémité étant montée sur le montant de support (240) et la deuxième extrémité étant montée sur la base (250) pour commander le niveau de résistance, la vitesse et l'angle de pivotement de la plateforme d'utilisateur (246) dans le plan horizontal ; et
dans lequel le dispositif d'activité physique (200) est configuré de sorte que, pendant l'utilisation, l'utilisateur se tient sur la surface supérieure de la plateforme d'utilisateur (246) et réalise des mouvements d'activité physique pour propulser la plateforme d'utilisateur (246) en pivotement dans le plan horizontal et le plan vertical.

2. Dispositif d'activité physique polyvalent selon la revendication 1, dans lequel le dispositif d'activité physique copie des mouvements de surf des neiges.

3. Dispositif d'activité physique polyvalent selon la revendication 2, comportant une plateforme d'utilisateur plane unique ayant une première extrémité et une deuxième extrémité supportées pivotantes sur des pivots verticaux montés sur le montant de support pour permettre à une plateforme d'utilisateur plane unique de pivoter dans un plan vertical perpendiculaire à la surface de support sensiblement horizontale ; et
dans lequel, pendant l'utilisation, l'utilisateur se tient sur la plateforme d'utilisateur plane unique et réalise des mouvements d'activité physique de surf des neiges pour propulser la plateforme d'utilisateur en pivotement dans le plan horizontal et le plan vertical.

4. Dispositif d'activité physique polyvalent selon l'une quelconque des revendications précédentes, dans lequel le(s) élément(s) de résistance comprennent au moins un élément d'amortissement ayant une première extrémité et une deuxième extrémité, la première étant montée sur le montant de support et la deuxième extrémité étant montée sur la base pour commander le niveau de résistance, la vitesse et l'angle de pivotement de la plateforme d'utilisateur dans un plan horizontal.

5. Dispositif d'activité physique polyvalent selon l'une quelconque des revendications précédentes, dans lequel au moins l'un des éléments de résistance a une première extrémité montée sur la base ou sur le montant de support, et une deuxième extrémité montée sur la plateforme d'utilisateur, pour commander le niveau de résistance, la vitesse et l'angle de pivotement de la plateforme d'utilisateur dans le plan vertical.

6. Dispositif d'activité physique polyvalent selon la revendication 5, dans lequel le(s) élément(s) de résistance destinés à commander le niveau de résistance, la vitesse et l'angle de pivotement de la plateforme d'utilisateur dans le plan vertical comprennent au moins un élément d'amortissement ayant une première extrémité montée sur la plateforme d'utilisateur et une deuxième extrémité montée sur la base ou sur le montant de support pour commander le niveau de résistance, la vitesse et l'angle de pivotement de la plateforme dans le plan vertical.

7. Dispositif d'activité physique polyvalent selon l'une quelconque des revendications précédentes, dans lequel la plateforme d'utilisateur est en communication numérique avec une unité de traitement d'ordinateur afin de transmettre des données de position et de mouvement à l'unité de traitement d'ordinateur pour un traitement en une expérience interactive pour l'utilisateur.
